# FASCICULE DE BREVET EUROPEEN

(11) **EP 2 263 474 B1**
(45) Date de publication et mention de la délivrance du brevet: **04.03.2015**
(21) Numéro de dépôt: 10166217.9
(22) Date de dépôt: 16.06.2010
(51) Int. Cl.: A23K 1/16, A23K 1/175, A23K 1/18

(54) **Prémélange alimentaire et compléments alimentaires les contenant et leur procédé de préparation**
Vormischung und Nahrungergänzungsmittel enthaltend diese, und herstellungsverfahren
Food premix and dietary supplements containing it, and process of manufacture

(30) Priorité: 17.06.2009 FR 0954087
(43) Date de publication de la demande: 22.12.2010
(73) Titulaire: JD Invest, 94100 Saint-Maur- Des-fosses (FR)
(72) Inventeur: Drai, Joël, 94210, LA VARENNE SAINT HILAIRE (FR); Camprasse, Muriel, 72230 Arnage (FR)
(74) Mandataire: Cabinet Plasseraud

(56) Documents cités:
- WO-A1-98/47389
- DE-A1- 2 854 817
- DE-A1- 19 606 024
- FR-A1- 2 406 395
- JP-A- 2002 125 582
- DATABASE WPI Week 200920 Thomson Scientific, London, GB; AN 2009-E24233 XP002565405 GAO H ET AL: "Abalone feed..." & CN 101 341 939 A (DALIAN TAIPINGYANG AQUATIC PROD CO LTD) 14 janvier 2009 (2009-01-14)
- DATABASE WPI Week 200914 Thomson Scientific, London, GB; AN 2009-E77008 XP002565406 NAM KSJ: "Functional feed additive..." & KR 100 860 209 B1 (JEONJU KIMJAE WANJU STOCK RAISING COOP) 24 septembre 2008 (2008-09-24)
- GAO ET AL: "Effect of nanometer pearl powder on calcium absorption and utilization in rats", FOOD CHEMISTRY, ELSEVIER LTD, NL, vol. 109, no. 3, 25 December 2007 (2007-12-25), pages 493-498, XP022534617, ISSN: 0308-8146, DOI: 10.1016/J.FOODCHEM.2007.12.052

## Description

La présente demande concerne des prémélanges alimentaires et des compléments alimentaires les contenant ainsi que leur procédé de préparation. Lesdits prémélanges et compléments alimentaires sont particulièrement appropriés à l'alimentation équine, bovine, ovine, porcine et des volailles.

Les progrès accomplis en matière de nutrition ainsi que les résultats de la recherche sur la biologie végétale et la physiopathologie du tube digestif ont montré que l'alimentation non équilibrée induisait des pathologies qui affectent non seulement le tractus digestif mais également tous les autres systèmes et organes.

Les recommandations qui en ont résulté quant aux nouvelles règles d'hygiène alimentaire pour l'homme pourraient tout aussi bien être extrapolées aux animaux, et aux équidés en particulier, d'autant que leur alimentation est presque exclusivement artificielle avec de nombreux additifs d'origine synthétique.

On sait que les granulés, floconnés et mash proposés par les fabricants d'aliments pour bétail, sont essentiellement composés de foin, de paille, de céréales, de mélasse, d'avoine, d'orge, de blé, etc., ainsi que d'autres céréales consommées habituellement par les équidés et le bétail en liberté, mais leur transformation et les traitements, surtout thermiques, détruisent la plupart des nutriments qui les composent et notamment les protéines, les acides aminés, les minéraux, les vitamines et oligo-éléments. Ces nutriments éminemment fragiles et dont la structure est altérée par la chaleur, font donc défaut. C'est pour ces raisons que des additifs d'origine synthétique sont ajoutés de manière à compenser les pertes quantitatives et qualitatives de tous ces nutriments dont l'absence et les taux insuffisants affecteraient, de manière significative, non seulement les performances de l'animal qui en consomme mais encore, auraient des conséquences néfastes dès la conception, lors de la gestation, au cours de la croissance et jusqu'à l'âge adulte.

Il faut donc trouver de nouveaux prémélanges alimentaires dont la teneur en nutriments, tels que protéines, acides aminés, oligo-éléments, vitamines, minéraux, glucides, lipides et autres substances nécessaires à l'édification et au métabolisme des cellules de tous systèmes et organes respecte les recommandations quant aux valeurs de l'UFC (Unité Fourragère Cheval) et du MADC (Matière Azotée Digestible Cheval) et est telle qu'elle n'est pas affectée par les traitements mis en oeuvre lors de leur incorporation aux granulés, floconnés et mash et, également concevoir un mode d'incorporation de ces prémélanges alimentaires sans en dénaturer la structure.

Le document JP2002125582 décrit l'utilisation de la poudre de coquilles d'huitre pour l'alimentation animale. Le document CN 2008 1013146 (résumé 2009-E24233 de WPI/Thompson) décrit l'utilisation de poudre de coquille et d'algue pour la préparation d'un aliment pour animaux.

Le document KR 100860209B (résumé 2009-E77008 de WPI/Thompson) décrit un additif pour alimentation animale comprenant de la poudre de coquille d'huitre et de la poudre de *coco poria.*

Le document DE2854817 concerne un additif pour l'alimentation de poules pondeuses comprenant de la poudre d'huitre, à utiliser dans un aliment comprenant du mais et du soja, deux oléagineux riches en acides gras polyinsaturés et en fibres.

Le document WO98/47389 présente également un additif pour l'alimentation de poules pondeuses comprenant de la poudre d'huitre, à utiliser dans un aliment comprenant des graines de lin.

Le document FR 2 406 395 décrit un complément alimentaire destiné à s'ajouter à un aliment de base constitué notamment de maïs, de mélasse, d'avoine, d'orge, de son, de luzerne déshydratée, de tourteaux de soja et de lin, le dit complément alimentaire étant adapté à l'alimentation des chevaux. Le document Gao et Al., Food Chemistry, ELSEVIER LTD, NL, vol 109, n°3, 25 décembre 2007, pages 493-498. présente une étude sur l'effet de la poudre nanométrique de la nacre sur l'absorption du calcium chez les rats.

### DESCRIPTION DETAILLEE DE L'INVENTION

Les présents inventeurs ont trouvé que de tels prémélanges alimentaires à base de produits exclusivement naturels répondaient à ces exigences.

Ainsi, la présente invention porte sur un prémélange alimentaire comprenant :
- au moins un composant choisi dans le groupe comprenant une algue, une pseudo-céréale, une amande oléagineuse, un fruit oléagineux, une plante herbacée ou aromatique, et leurs mélanges, et
- au moins un complexe organo-minéral d'amino-acides.

Le complexe organo-minéral d'amino-acides est de la poudre de nacre. La poudre de nacre est issue de coquille de bivalves choisis dans le groupe comprenant la Pinctada Maxima, la Pinctada Margaritifera et autres Pinctadines, le Tridacnae gigas, et leurs mélanges. Cette poudre de nacre est directement assimilable, présente les amino-acides essentiels au maintien de la vie et a des propriétés de régénération et de protection cellulaire qui assurent l'intégrité, la réparation, le bon fonctionnement de la muqueuse intestinale, propriétés qui sont optimisées par la présence d'oligo-éléments constitutifs tels que Br,Ca,Ce, Cl, Cu, Fe,K, La, Mn, Na, Sm, Sr, Zn. De plus la nacre assure un apport en calcium d'une grande pureté qui en facilité l'absorption.

La poudre de nacre est la nacre mécanostructurée. On peut utiliser en supplément de la nacre micronisée, de la nacre nanonisée, et leurs mélanges.

Le diamètre moyen équivalent en volume des poudres de l'invention est déterminé par diffraction laser à l'aide d'un granulomètre laser. A partir de la répartition granulométrique mesurée sur une large gamme, le diamètre moyen équivalent en volume ou D(4;3) est calculé selon la formule suivante : D(4;3) = ∑ (d⁴) / ∑ (d³).

Par « nacre micronisée », on entend de la nacre broyée jusqu'à un diamètre moyen en volume des particules de 1 à 200 microns, de préférence de 5 à 100 microns et plus préférentiellement encore de 10 à 50 microns. Par « nacre nanonisée » ou « nanonacre », on entend de la nacre présentant des particules ayant un diamètre moyen en volume de 1 à 500 nm, de préférence inférieur ou égal à 250 nm et plus préférentiellement encore inférieur ou égal à 100 nm. Par « nacre mécanostructurée », on entend de la nacre obtenue par mécanosynthèse à une température inférieure à 40°C, de préférence inférieure à 20°C, et plus préférentiellement encore inférieure ou égale à 0°C, dont les particules présentent un diamètre moyen en volume inférieur à 500 nm, de préférence inférieur à 250 nm et plus préférentiellement encore inférieur ou égal à 100 nm. Une telle nacre mécanostructurée est décrite dans la demande de brevet FR 09 54066, qui a été publiée le 24/12/2010 sous la référence FR 2 946 888.

En particulier, selon un mode de réalisation de ce procédé, le test nacré (c'est-à-dire la coquille interne du mollusque bivalve) est broyé à environ 20 microns et placé dans un broyeur planétaire dans des bols en oxyde de zirconium contenant des billes en oxyde de zirconium de diamètres variables de 20 à 2 mm. Le broyeur planétaire peut atteindre des vitesses de rotation de 1100 tr/mn pour des accélérations de 95G. L'ensemble est soumis à des séquences de broyage et de réfrigération à -18°C de durée déterminée.

On utilise de la nacre mécanostructurée qui, compte tenu de sa composition, permet d'optimiser l'absorption de ces différents éléments constitutifs.

Selon un mode de réalisation particulier, le prémélange alimentaire selon l'invention comprend en outre un complexe vitaminique. Le complexe vitaminique est de préférence issu d'un fruit, notamment de l'acerola (Malpighia punicifolia), sous forme de poudre, hautement biodisponible ayant des propriétés anti-asthéniques, diurétiques, anti-oxydantes et anti-infectieuses.

Selon un mode de réalisation particulier, le prémélange selon l'invention comprend :
- de 60 à 95 %, de préférence de 65 à 85 %, et plus préférentiellement encore de 70 à 80 % en poids du poids du prémélange d'au moins un composant choisi dans le groupe comprenant une algue, une pseudo-céréale, une amande oléagineuse, un fruit oléagineux, une plante herbacée ou aromatique, et leurs mélanges,
- de 5 à 40 %, de préférence de 8 à 30 %, et plus préférentiellement encore de 10 à 25 % en poids du poids du prémélange d'au moins un complexe organo-minéral d'amino-acides, et
- de 0 à 1 %, de préférence de 0,05 à 0,5 %, et plus préférentiellement encore de 0,1 à 0,3 % en poids du poids du prémélange d'un complexe vitaminique.

L'algue peut être choisie parmi les laminarines, les digitaires, spirulines et leurs mélanges.

Comme algue, on préférera utiliser la spiruline (Spirulina maxima). Cette algue présente une teneur élevée, d'environ 55 à 70% en poids, en protéines digestibles, avec une proportion optimale en acides aminés essentiels, nécessaires à la formation et à la réparation des tissus comme les os et les muscles, les tendons et la peau. Cette algue contient en outre une source exceptionnelle de caroténoïdes (pouvant aller jusqu'à environ 25 000 UI pour 5 g), notamment du bétacarotène, précurseur de la vitamine A. Elle contient également du fer dont la présence est indispensable à la synthèse des globules rouges, au transport de l'oxygène entre autres. Cette algue est riche en acides gras insaturés. Son activité antioxydante combat la production de radicaux libres. Sa faible teneur calorique en fait un nutriment adapté à la gestation.

A titre de pseudo-céréale, on peut utiliser le quinoa, le sarrasin, l'amarante, et leurs mélanges.

Comme pseudo-céréale, on préfère utiliser le quinoa (Chenopodium quinoa) riche en fibres solubles et insolubles puisqu'il contient environ 9 à 10% en poids de fibres et qu'il présente un faible apport calorique. Le quinoa permet un transit intestinal de bonne qualité, prévient les coliques et confère une sensation de satiété précoce. Le quinoa présente un taux de protéines d'environ 15% avec une composition en acides aminés essentiels très équilibrée. Contrairement aux céréales, le quinoa est riche en lysine. Il est aussi riche en cystine, arginine, histidine et isoleucine, c'est-à-dire en acides aminés essentiels à la vie. Le quinoa contient également les minéraux les plus importants, à savoir :
- le manganèse, co-facteur de plusieurs enzymes, qui participe à une douzaine de processus métaboliques et intervient dans la prévention des dommages causés par les radicaux libres,
- le fer, essentiel au transport de l'oxygène, à la fabrication des globules rouges, des hormones, des nouvelles cellules, et à l'absorption de la vitamine C,
- le cuivre nécessaire à la fabrication de l'hémoglobine et du collagène, servant à la structure et à la réparation des tissus dans l'organisme,
- le phosphore, deuxième minéral le plus abondant dans l'organisme après le calcium et essentiel dans la formation, l'édification et la santé du squelette et des dents, essentiel au développement du foetus et au maintien du pH sanguin,
- le magnésium qui participe au développement osseux et à la construction des protéines, qui intervient dans les réactions enzymatiques, la contraction musculaire, l'édification du système immunitaire et la transmission de l'influx nerveux,
- le zinc nécessaire à la fabrication du matériel génétique, à la fabrication de l'insuline, au développement du foetus, à la cicatrisation des plaies et aux réactions immunitaires.

Le quinoa est également une source de vitamine B2, qui contribue à la croissance et à la réparation des tissus et joue un rôle dans le métabolisme de l'énergie de toutes les cellules. Le quinoa est un très bon carburant énergétique et présente des propriétés galactogènes très marquées.

Comme amandes oléagineuses, on pourra utiliser la noix de coco (Cocos nucifera). La noix de coco est utilisée sous forme de pulpe grillée ou non. On préférera utiliser la noix de coco en raison de sa teneur en fibres solubles et insolubles qui diminue son index glycémique. En outre, la noix de coco contient de nombreux minéraux dont le fer, le manganèse, le cuivre, le phosphore, le sélénium, le magnésium, le potassium et le zinc. Sa teneur en vitamines B3, B5, B6 et B9 lui confère une activité prépondérante dans la formation et la croissance des organes, le renouvellement des cellules, l'utilisation de l'énergie apportée par les aliments. En outre la noix de coco est appréciée pour ses qualités organoleptiques.

Comme fruits oléagineux, on pourra utiliser la noisette, la noix de cajou, l'amande, la noix et leurs mélanges. On préférera utiliser la noix (Juglans spp) sous forme de tourteaux et/ou de cerneaux. Celle-ci présente une teneur élevée en acide gras poly-insaturés, en mélatonine, en phytostérols ayant de puissantes propriétés anti-oxydantes, en fibres qui représentent 90% de son poids et qui interviennent dans le bon fonctionnement du transit intestinal et dans la protection de la muqueuse intestinale. Par ailleurs la noix contient des minéraux dont le manganèse, le phosphore, le magnésium, le fer, le zinc, le cuivre, ainsi que des vitamines telles que la vitamine B1 co-enzyme nécessaire à la production d'énergie, à la transmission de l'influx nerveux et à la croissance, la vitamine B6 qui intervient dans le métabolisme des protéines, des acides gras, dans la synthèse des neurotransmetteurs et la formation des globules rouges et qui est impliquée dans la transformation du glycogène en glucose et dans le bon fonctionnement du système immunitaire, la vitamine B9 qui intervient dans la fabrication de toutes les cellules du corps et notamment du matériel génétique, et la vitamine E présentant des activités anti-oxydantes.

Comme plante herbacée ou aromatique, on pourra utiliser le curcuma, l'estragon, le basilic, l'ail, et leurs mélanges. Ces plantes sont bénéfiques au tractus intestinal.

Selon un mode de réalisation avantageux, on utilise le rizhome séché et réduit en poudre du curcuma (curcuma longa) pour ses propriétés protectrices du revêtement cutané ainsi que ses propriétés anti-inflammatoires et chimio-préventives qui assurent une protection du tube digestif et stimule les cellules du système immunitaire.

Selon un mode de réalisation avantageux de l'invention, le prémélange comprend :
- au moins un composant, de préférence au moins deux composants, choisi dans le groupe comprenant la spiruline, le quinoa, la pulpe de noix de coco, la noix, le curcuma, et leurs mélanges ;
- de la nacre choisie parmi la nacre micronisée, la nanonacre, la nacre mécanostructurée, et leurs mélanges ;
- éventuellement, de l'acérola.

Selon un mode de réalisation préféré, le prémélange selon l'invention comprend :
- 0 à 25 %, de préférence 5 à 20 % de quinoa,
- 40 à 80 %, de préférence 50 à 70 % de noix de coco,
- 25 à 60 %, de préférence 25 à 50 % de noix,
- 5 à 40 %, de préférence 10 à 25 % de nacre,
- 0 à 0,5 %, de préférence 0,05 à 0,1 % d'acérola,
- 0 à 5 %, de préférence 1 à 2 % de curcuma,
les % étant des % en poids par rapport au poids du prémélange.

Les prémélanges selon l'invention sont préparés par mélange des poudres qui le constituent, éventuellement suivi d'une compression. La préparation des différents constituants sous forme de poudre se fait en veillant à ce que les matières premières ne dépassent jamais une température de 60°C, de préférence de 40°C et plus préférentiellement encore de 20°C. En veillant au maintien de cette température, on s'assure que les différents ingrédients conserveront la totalité de leurs éléments constitutifs, notamment vitamines, protéines et acides aminés qui sont sensibles à la chaleur, et de ce fait conserveront leurs qualités nutritives.

Les prémélanges selon l'invention peuvent être utilisés à raison de 5 à 25%, de préférence de 10 à 15% en poids dans la ration alimentaire journalière de l'animal. Ainsi, l'invention a également pour objet l'utilisation du prémélange décrit ci-dessus, à raison de 5 à 25%, de préférence de 10 à 15% en poids dans la ration alimentaire journalière d'un animal.

Les prémélanges selon l'invention peuvent également être additionnés de diluants et/ou charges de façon à former un complément alimentaire prêt à l'emploi directement consommable. Ainsi, l'invention a également pour objet un complément alimentaire comprenant le prémélange décrit précédemment et au moins un diluant et/ou charge. A titre d'exemple de charges et/ou diluants, on peut citer des farines, de préférence biologiques, riches en fibres, du lait. Le complément alimentaire peut être mis en forme par compression sans montée en température au-delà de 60°C, de préférence au-delà de 40°C et plus préférentiellement encore au-delà de 20°C, pour former des comprimés, des granulés ou biscuits prêts à consommer pour les animaux en complément de leur alimentation classique. Lorsque le diluant est du lait, le complément alimentaire est particulièrement adapté à l'alimentation des jeunes animaux orphelins non sevrés et est donné en complément du lait maternel.

### EXEMPLES

Dans les exemples suivants, la nacre mécanostructurée a été obtenue par le procédé décrit dans l'exemple 2 de la demande de brevet FR 09 54066.

La nacre micronisée présente un diamètre moyen de 2 à 10 microns.

### Exemple 1:

On prépare un prémélange pour aliment pour chevaux, présentant la formule suivante :

| | |
|---|---|
| Spiruline | 5 g |
| Quinoa | 3 g |
| Pulpe de noix de coco grillée | 1 g |
| Tourteaux de noix | 2 g |
| Nacre mécanostructurée | 2 g |
| Acérola | 2 g |

Ce prémélange est ajouté à de l'alimentation pour chevaux, à raison de 15 % en poids avec une garantie analytique en protéines de 14%.

Cette formulation est particulièrement adaptée aux besoins de la jument poulinière en fin de gestation ainsi qu'au poulain, en lui procurant tous les nutriments nécessaires à son maintien en forme ainsi que toutes les molécules utiles à l'édification du squelette, au développement et la croissance de tous les organes du foetus, à la production de lait et au maintien en bonne forme de la poulinière.

### Exemple 2 :

On prépare un prémélange pour aliment pour chevaux, présentant la formule suivante :

| | |
|---|---|
| Spiruline | 7 g |
| Quinoa | 1 g |
| Pulpe de noix de coco grillée | 1 g |
| Cerneaux de noix | 1 g |
| Nacre micronisée | 2 g |
| Acérola | 3 g |

Ce prémélange est ajouté à de l'alimentation pour chevaux, à raison de 9 % en poids avec une garantie analytique en protéines de 13%.

Cette formulation est adaptée aux chevaux de sport et de course. Elle est destinée à compenser les pertes énergétiques, entretenir la masse musculaire et combattre la production de radicaux libres générés lors des épreuves sportives ou les courses, éviter les crampes et courbatures, les myosites, à stimuler la réparation des microtraumatismes articulaires et musculaires.

### Exemple 3 :

On prépare un prémélange pour aliment pour chevaux, présentant la formule suivante :

| | |
|---|---|
| Spiruline | 3 g |
| Quinoa | 3 g |
| Pulpe de noix de coco grillée | 2 g |
| Tourteaux de noix | 2 g |
| Nacre micronisée | 1 g |
| Nacre mécanostructurée | 1 g |

Ce prémélange est ajouté à de l'alimentation pour chevaux, à raison de 12 % en poids avec une garantie analytique en protéines de 12%.

Ce prémélange est adapté à des chevaux de loisirs ne fournissant pas d'effort particulier.

## Revendications

1. Prémélange alimentaire comprenant :
- au moins un composant choisi dans le groupe comprenant une algue, une pseudo-céréale, une amande oléagineuse, un fruit oléagineux, une plante aromatique ou herbacée, et leurs mélanges, et
- de la poudre de nacre issue de coquille de bivalves choisi dans le groupe comprenant la Pinctada Maxima, Pinctada Margaritifera ou toutes autres Pinctadines, le Tridacnae Gigas, et leurs mélanges, la dite poudre de nacre étant de la nacre mécanostructurée.

2. Prémélange selon la revendication 1, **caractérisé par le fait que** le prémélange alimentaire comprend en outre de la nacre micronisée, de la nacre nanonisée, et leurs mélanges.

3. Prémélange alimentaire selon l'une des revendications 1 ou 2, comprenant en outre un complexe vitaminique.

4. Prémélange alimentaire selon l'une quelconque des revendications 1 à 3, qui comprend :
- de 60 à 95 %, de préférence de 60 à 85 %, et plus préférentiellement encore de 70 à 80 % en poids du poids du prémélange d'au moins un composant choisi dans le groupe comprenant une algue, une pseudo-céréale, une amande oléagineuse, un fruit oléagineux, une plante herbacée ou aromatique, et leurs mélanges,
- de 5 à 40 %, de préférence de 8 à 30 %, et plus préférentiellement encore de 10 à 25 % en poids du poids du prémélange de poudre de nacre, et
- de 0 à 1 %, de préférence de 0,05 à 0,5 %, et plus préférentiellement encore de 0,1 à 0,3% en poids du poids du prémélange d'un complexe vitaminique.

5. Prémélange alimentaire selon l'une quelconque des revendications 1 à 4, **caractérisé par le fait que** l'algue est choisie dans le groupe comprenant les laminarines, les digitaires, les spirulines et leurs mélanges, l'algue est de préférence la spiruline.

6. Prémélange alimentaire selon l'une quelconque des revendications 1 à 5, **caractérisé par le fait que** la pseudo-céréale est choisie dans le groupe comprenant le quinoa, le sarrasin, l'amarante, et leurs mélanges, la pseudo-céréale est de préférence le quinoa.

7. Prémélange alimentaire selon l'une quelconque des revendications 1 à 6, **caractérisé par le fait que** l'amande oléagineuse est la noix de coco, de préférence sous forme de pulpe grillée ou non.

8. Prémélange alimentaire selon l'une quelconque des revendications 1 à 7, **caractérisé par le fait que** le fruit oléagineux est la noisette, la noix de cajou, l'amande, la noix et leurs mélanges, de préférence le fruit oléagineux est la noix, notamment sous forme de tourteaux ou de cerneaux.

9. Prémélange alimentaire selon l'une quelconque des revendications 1 à 8, **caractérisé par le fait que** la plante herbacée ou aromatique est choisie dans le groupe comprenant le curcuma, l'estragon, le basilic, l'ail, et leurs mélanges, de préférence le rizhome séché et réduit en poudre du curcuma (curcuma longa).

10. Prémélange alimentaire selon l'une quelconque des revendications 1 à 8, **caractérisé en ce qu'**il comprend :
- 0 à 25 %, de préférence 5 à 20 % de quinoa,
- 40 à 80 %, de préférence 50 à 70 % de noix de coco,
- 25 à 60 %, de préférence 25 à 50 % de noix,
- 5 à 40 %, de préférence 10 à 25 % de nacre,
- 0 à 0,5 %, de préférence 0,05 à 0,1 % d'acérola,
- 0 à 5 %, de préférence 1 à 2 % de curcuma.

11. Utilisation d'un prémélange selon l'une quelconque des revendications 1 à 10, à raison de 5 à 25%, de préférence de 10 à 15% en poids dans la ration alimentaire journalière de l'animal.

12. Complément alimentaire comprenant un prémélange selon l'une quelconque des revendications 1 à 10, et au moins un diluant et/ou charge.

## Patentansprüche

1. Nahrungsmittel-Vormischung, umfassend:
- mindestens einen Bestandteil, ausgewählt aus der Gruppe umfassend eine Alge, eine Pseudocerealie, einen ölhaltigen Samen, eine ölhaltige Frucht, eine aromatische Pflanze oder Kräuterpflanze und deren Gemische und
- Perlmuttpulver aus Muschelschale, ausgewählt aus der Gruppe umfassend Pinctada Maxima, Pinctada Margaritifera oder alle anderen Perlmuscheln, Tridacnae Gigas und deren Gemische, wobei das Perlmuttpulver mechanisch strukturiertes Perlmutt ist.

2. Vormischung nach Anspruch 1, **dadurch gekennzeichnet, dass** die Nahrungsmittel-Vormischung ferner mikronisiertes Perlmutt, nanonisiertes Perlmutt und deren Gemische umfasst.

3. Nahrungsmittel-Vormischung nach einem der Ansprüche 1 oder 2, ferner umfassend einen Vitaminkomplex.

4. Nahrungsmittel-Vormischung nach einem der Ansprüche 1 bis 3, welche umfasst:
- 60 bis 95, vorzugsweise 60 bis 85, und noch stärker bevorzugt 70 bis 80 Gew.-%, bezogen auf das Gewicht der Vormischung, mindestens eines Bestandteils, ausgewählt aus der Gruppe umfassend eine Alge, eine Pseudocerealie, einen ölhaltigen Samen, eine ölhaltige Frucht, eine Kräuterpflanze oder aromatische Pflanze und deren Gemische,
- 5 bis 40, vorzugsweise 8 bis 30, und noch stärker bevorzugt 10 bis 25 Gew.-%, bezogen auf das Gewicht der Vormischung, an Perlmuttpulver und
- 0 bis 1, vorzugsweise 0,05 bis 0,5, und noch stärker bevorzugt 0,1 bis 0,3 Gew.-%, bezogen auf das Gewicht der Vormischung, eines Vitaminkomplexes.

5. Nahrungsmittel-Vormischung nach einem der Ansprüche 1 bis 4, **dadurch gekennzeichnet, dass** die Alge aus der Gruppe umfassend Laminarine, Fingerhirse, Spirulina und deren Gemische, ausgewählt ist, wobei die Alge vorzugsweise Spirulina ist.

6. Nahrungsmittel-Vormischung nach einem der Ansprüche 1 bis 5, **dadurch gekennzeichnet, dass** die Pseudocerealie aus der Gruppe umfassend Quinoa, Buchweizen, Amaranth und deren Gemische, ausgewählt ist, wobei die Pseudocerealie vorzugweise Quinoa ist.

7. Nahrungsmittel-Vormischung nach einem der Ansprüche 1 bis 6, **dadurch gekennzeichnet, dass** der ölhaltige Samen Kokosnuss, vorzugsweise in Form von geröstetem oder ungeröstetem Mark, ist.

8. Nahrungsmittel-Vormischung nach einem der Ansprüche 1 bis 7, **dadurch gekennzeichnet, dass** die ölhaltige Frucht Haselnuss, Cashewnuss, Mandel, Walnuss und deren Gemische, ist, wobei die ölhaltige Frucht vorzugsweise Walnuss, insbesondere in Form von Presskuchen oder Nusskernen, ist.

9. Nahrungsmittel-Vormischung nach einem der Ansprüche 1 bis 8, **dadurch gekennzeichnet, dass** die Kräuterpflanze oder aromatische Pflanze aus der Gruppe umfassend Kurkuma, Estragon, Basilikum, Knoblauch und deren Gemische, vorzugsweise getrocknetes und zu Pulver reduziertes Kurkuma-Rhizom (Curcuma longa), ausgewählt ist.

10. Nahrungsmittel-Vormischung nach einem der Ansprüche 1 bis 8, **dadurch gekennzeichnet, dass** sie umfasst:
- 0 bis 25%, vorzugsweise 5 bis 20% Quinoa,
- 40 bis 80%, vorzugsweise 50 bis 70% Kokosnuss,
- 25 bis 60%, vorzugsweise 25 bis 50% Walnuss,
- 5 bis 40%, vorzugsweise 10 bis 25% Perlmutt,
- 0 bis 0,5%, vorzugsweise 0,05 bis 0,1% Acerola,
- 0 bis 5%, vorzugsweise 1 bis 2% Kurkuma.

11. Verwendung einer Vormischung nach einem der Ansprüche 1 bis 10 in einer Menge von 5 bis 25, vorzugsweise 10 bis 15 Gew-%, in der täglichen Futterration des Tieres.

12. Nahrungsergänzungsmittel, umfassend eine Vormischung nach einem der Ansprüche 1 bis 10 und mindestens ein Verdünnungsmittel und/oder mindestens einen Füllstoff.

## Claims

1. Food premix comprising:
- at least one component selected from the group comprising an algae, a pseudo-cereal, an oleaginous seed, an oleaginous fruit, an aromatic or herbaceous plant, and mixtures thereof, and
- powdered nacre from bivalve mollusc selected from the group comprising Pinctada Maxima, Pinctada Margaritifera or any other Pinctada, Tridacnae Gigas, and mixtures thereof, said nacre powder being mechano-structured nacre.

2. Premix as claimed in claim 1, **characterised in that** the food premix further comprises micronised nacre, nanonised nacre and mixtures thereof.

3. Food premix as claimed in one of claims 1 or 2, further comprising a vitamin complex.

4. Food premix as claimed in any one of claims 1 to 3, which comprises:
- 60 to 95 %, preferably 60 to 85 %, and even more preferably 70 to 80 % by weight based on the premix weight of at least one component selected from the group comprising an algae, a pseudo-cereal, an oleaginous seed, an oleaginous fruit, an aromatic or herbaceous plant, and mixtures thereof,
- 5 to 40 %, preferably 8 to 30 %, and even more preferably 10 to 25 % by weight based on the premix weight of nacre powder, and
- 0 to 1 %, preferably 0.05 to 0.5 %, and even more preferably 0.1 to 0.3 % by weight based on the premix weight of a vitamin complex.

5. Food premix as claimed in any one of claims 1 to 4, **characterised in that** the algae is selected from the group comprising laminarines, digitaria, spirulinas and mixtures thereof, the algae preferably being spirulina.

6. Food premix as claimed in any one of claims 1 to 5, **characterised in that** the pseudo-cereal is selected from the group comprising quinoa, buckwheat, amaranth and mixtures thereof, the pseudo-cereal preferably being quinoa.

7. Food premix as claimed in any one of claims 1 to 6, **characterised in that** the oleaginous seed is coconut, preferably in the form of pulp, grilled or not.

8. Food premix as claimed in any one of claims 1 to 7, **characterised in that** the oleaginous fruit is hazelnut, cashew nut, almond, walnut and mixtures thereof, the oleaginous fruit preferably being walnut, especially in the form of oil-cakes or kernels.

9. Food premix as claimed in any one of claims 1 to 8, **characterised in that** the aromatic or herbaceous plant is selected from the group comprising curcuma, tarragon, basil, garlic and mixtures thereof, preferably dried curcuma rhizome reduced to powder (curcuma longa).

10. Food premix as claimed in any one of claims 1 to 8, **characterised in that** it comprises:
- 0 to 25 %, preferably 5 to 20 %, of quinoa,
- 40 to 80 %, preferably 50 to 70 %, of coconut,
- 25 to 60 %, preferably 25 to 50 %, of walnut,
- 5 to 40 %, preferably 10 to 25 %, of nacre,
- 0 to 0.5 %, preferably 0.05 to 0.1 %,of acerola,
- 0 to 5 %, preferably 1 to 2 %, of curcuma.

11. Use of a premix as claimed in any one of claims 1 to 10 in a quantity of 5 to 25 %, preferably 10 to 15 %, by weight in the daily food intake of an animal.

12. Dietary supplement comprising a premix as claimed in any one of claims 1 to 10 and at least one diluent and/or base.
